# FASCICULE DE BREVET EUROPEEN

(11) **EP 1 767 452 B1**
(45) Date de publication et mention de la délivrance du brevet: **06.07.2011**
(21) Numéro de dépôt: 06019457.8
(22) Date de dépôt: 18.09.2006
(51) Int. Cl.: B64C 27/51

(54) **Rotor de giravion à pales articulées en battement et en traînée**
Rotor für Hubschrauber mit Schlag- und Schwenkgelenken
Rotor for rotorcraft with blades articulated in flap and drag

(30) Priorité: 21.09.2005 FR 0509661
(43) Date de publication de la demande: 28.03.2007
(73) Titulaire: EUROCOPTER, 13725 Marignane Cédex (FR)
(72) Inventeur: Beroul, Frédéric, 13100 Aix En Provence (FR)
(74) Mandataire: GPI & Associés

(56) Documents cités:
- US-A- 4 297 078
- US-A- 4 304 525
- US-A- 4 504 193
- US-A- 5 372 478

## Description

La présente invention est relative à un rotor de gitavion à pales articulées en battement, en traînée et en pas.

Le domaine technique de l'invention est celui de la fabrication d'hélicoptères.

La présente invention est plus particulièrement relative à un rotor de giravion comportant au moins deux pales articulées en battement et en traînée par rapport au moyeu du rotor, ainsi que des moyens d'amortissement prévus pour amortir les oscillations des pales (par rapport au moyen) qui s'effectuent selon un axe d'articulation de la pale « en traînée », c'est-à-dire un axe sensiblement parallèle à l'axe longitudinal de l'arbre du rotor.

L'invention s'applique au rotor principal d'avance et de sustentation d'un giravion ainsi qu'au rotor « anti-couple » ou rotor de queue d'un giravion.

Les oscillations en traînée d'une pale articulée d'un rotor de giravion sont généralement peu amorties et s'effectuent selon une fréquence basse ; il en résulte un risque de couplage avec d'autres oscillations ou vibrations de fréquences voisines, en particulier avec des modes propres de déformation de la structure du giravion ; ces couplages risquent d'endommager ou détruite des organes du giravion ; ces oscillations provoquent des sollicitations ou efforts inutiles importants.

Les rotors de giravion sont en conséquence généralement équipés de moyens d'amortissement de ces oscillations, qui sont généralement qualifiés d'amortisseurs de traînée ou d'adaptateurs de fréquence.

Ces moyens d'amortissement ont pour but de réduire l'amplitude des oscillations de traînée en dissipant une partie de l'énergie de ces oscillations ; lorsque ces moyens d'amortissement présentent une raideur non négligeable cette raideur provoque une variation de la fréquence de réponse de l'ensemble constitué par la pale articulée et son amortisseur de traînée, ce dont résulte l'appellation « adaptateur de fréquence ».

Par la suite, on utilise indifféremment les termes « amortisseur » ou « adaptateur » pour désigner un dispositif ou système permettant de réduire ou adapter l'amplitude des oscillations de traînée de la pale articulée.

De tels amortisseurs comportent généralement une structure en matériau polymère présentant une capacité élevée de déformation élastique qui est habituellement désignée par « élastomère » ou « caoutchouc synthétique ».

De tels amortisseurs sont notamment décrits dans les brevets FR 2063969, FR 2111845, FR2127061, FR 2672947, FR 2677723 ct WO 9415113.

Un rotor de giravion comporte généralement autant d'amortisseurs de traînée que de pales ; lorsque l'amortisseur de traînée relie une pale au moyeu du rotor, la fixation de l'amortisseur à la pale et la fixation de l'amortisseur au moyeu sont réalisées dans des portions renforcées - de la pale et respectivement du moyeu - à cet effet ; il en résulte un rotor de masse, complexité, et coût augmentés.

Lorsque l'amortisseur - alors qualifié d'interpale - relie deux pales adjacentes du rotor, chaque pale doit comporter deux portions renforcées pour la fixation respective de deux adaptateurs.

Dans ce cas, par ailleurs, les amortisseurs de traînée ne peuvent pas amortir les oscillations de traînée des pales correspondant à un mode de traînée « collectif » dans lequel les oscillations des pales sont synchrones et en phase, puisqu'alors les déplacements relatifs entre les pales sont nuls.

Le mode de traînée collectif n'étant ni retenu ni amorti, il en résulte un risque plus élevé de couplage avec la chaîne de puissance (rotor - boite de transmission principale - moteurs), et la nécessité d'installer des butées de traînée sur le moyen pour limiter le débattement des pales lors des démarrages et arrêts du rotor.

Il a par ailleurs été décrit dans le brevet US 5372478, sur lequel le préambule de la revendication 1 est basée, un rotor comportant un unique assemblage d'amortisseurs contenus dans une enveloppe au centre du moyeu creux du rotor. L'assemblage comporte une série de couches d'élastomère alternées avec des plaques ; l'élastomère est sollicité en cisaillement ; chaque plaque est reliée par une courte bielle à l'extrémité interne de la pale correspondante ; l'enveloppe - ainsi que l'assemblage d'amortisseurs - est soit rigidement fixée au moyeu, soit montée pivotante par rapport à celui-ci, soit montée flottante, suspendue aux extrémités des pales.

Un tel système d'amortissement présente l'inconvénient d'être sensible aux oscillations des pales en battement.

Un objectif de l'invention est de proposer des moyens d'amortissement en traînée des oscillations des pales articulées d'un rotor de giravion, qui soient améliores et/ou qui remédient, en partie au moins, aux inconvénients des moyens connus d'amortissement en traînée.

Ainsi, l'invention s'applique à un rotor de giravion selon la revendication 1.

L'invention s'applique en particulier aux rotors comportant trois pales, quatre pales, ou cinq pales articulées.

Grâce à la liaison par rotule et à la proximité entre les deux rotules, le système d'amortissement en traînée est peu sensible - sinon insensible - aux oscillations de battement de la pale articulée ; il en résulte qu'il est soumis à de faibles efforts parasites, son encombrement est réduit et son efficacité pour la réduction des oscillations en traînée est améliorée.

Selon l'invention, le système d'amortissement est fixé à l'extrémité libre du levier de pas équipant chaque pale, par ladite seconde rotule ; en particulier, la rotule de liaison articulée entre le levier de pas et la structure commune et centrale d'amortissement en traînée, peut être adjacente (en particulier accolée) et coaxiale à la rotule de liaison articulée entre le levier de pas et la bielle de commande de pas.

De préférence également, la rotule de liaison articulée entre le levier de pas et la structure commune et centrale d'amortissement en traînée est disposée entre une butée sphérique reliant la pale au moyeu et la rotule de liaison articulée entre le levier de pas et la bielle de commande de pas.

De préférence, le centre de la rotule de liaison articulée entre le levier de pas et la structure commune et centrale d'amortissement en traînée, est situé au voisinage de l'axe reliant le centre d'une butée sphérique d'articulation de la pale au centre de la rotule de liaison articulée entre le levier de pas et la bielle de commande de pas ; en particulier, le centre de la seconde rotule est situé sur cet axe.

D'autres caractéristiques et avantages de l'invention apparaissent dans la description suivante, qui se réfère aux dessins annexés et qui illustre, sans aucun caractère limitatif, des modes préférés de réalisation de l'invention.
La figure 1 est une vue de dessus schématique d'un moyeu de rotor de giravion équipé d'un dispositif central d'amortissement pour l'amortissement des oscillations de traînée de quatre pales reliées au moyeu par leur pied respectif.
La figure 2 est une vue de dessus schématique du dispositif d'amortissement équipant le rotor de la figure 1, et la figure 3 est une vue de côté - selon III - du dispositif de la figure 2.
Les figures 4 et 5 sont des vues similaires à celle de la figure 1, qui illustrent le fonctionnement de l'amortisseur central de traînée.
La figure 6 est une vue de côté schématique d'un autre mode de réalisation d'un amortisseur central.
La figure 7 est une vue de dessus schématique d'un mode de réalisation d'un amortisseur central selon l'invention.
La figure 8 est une vue de dessus schématique d'un autre mode de réalisation d'un amortisseur central selon l'invention.
La figure 9 est une vue de dessus schématique partielle montrant l'intégration d'un amortisseur selon l'invention à un rotor de giravion.
La figure 10 est une vue de dessus schématique illustrant la liaison mécanique entre un amortisseur et un levier de pas d'une pale de rotor, conformément à un mode préféré de réalisation de l'invention.

Sur les giravions, la réponse en traînée des pales est positionnée sur une fréquence basse et elle est généralement peu amortie. Il en résulte des risques de couplages avec d'autres fréquences (fréquences propres de structure en particulier) qui augmentent le niveau de sollicitation des constituants du rotor et sont susceptibles de les endommager ou les détruire.

La maîtrise de l'amplitude de cette réponse se fait classiquement au moyen d'amortisseurs qui dissipent une partie de l'énergie du mode de traînée et amortissent ainsi la réponse de la pale, ou au moyen d'adaptateurs de fréquence qui, par leur raideur additionnelle, déplacent la fréquence de réponse de système global pale/adaptateur, tout en remplissant une fonction d'amortissement.

Bien qu'applicable aux amortisseurs comme aux adaptateurs (globalement désignés par "dampers" en anglais) la présente invention se rapporte plus particulièrement aux adaptateurs comportant un matériau élastomère amortissant.

La solution décrite ci-après permet de remédier aux limitations des adaptateurs interpales et des adaptateurs pale/moyeu, et présente des avantages supplémentaires :
- par rapport aux solutions classique ou interpale, l'invention permet de réduire le nombre de composants : pour un rotor quadripale, par exemple, il n'y a plus qu'un seul adaptateur au lieu de quatre ; le nombre de rotules est limité (à 4 au lieu de 8 pour un rotor quadripale) puisque l'adaptateur n'est relié qu'aux pales ; cette diminution du nombre de pièces permet la réduction du coût, de l'encombrement et des perturbations aérodynamiques ;
- le nombre de zones à renforcer sur le rotor est sensiblement réduit, par rapport aux montages habituels entre pale et moyeu ou entre pales ;
- en outre, l'élastomère de cet adaptateur pouvant dans certaines configurations être moulé en une seule opération, ses caractéristiques de raideur et d'amortissement sont plus homogènes que celles d'adaptateurs réalisés individuellement ; cette homogénéité favorise la réduction du balourd du rotor;
- l'adaptateur étant intégré au centre du moyeu, il se trouve protégé et moins exposé aux agressions environnementales et aux risques de dégradation accidentelle.

Ce dispositif teste compatible avec l'installation de commandes de vol - ou d'un collecteur de mesure ou de dégivrage - passant au centre du moyeu, lorsque l'adaptateur présente un évidement permettant le passage de ces équipements.

La description qui suit concerne particulièrement un rotor de queue quadripale mais reste applicable à d'autres types de rotors principaux ou arrière de giravions.

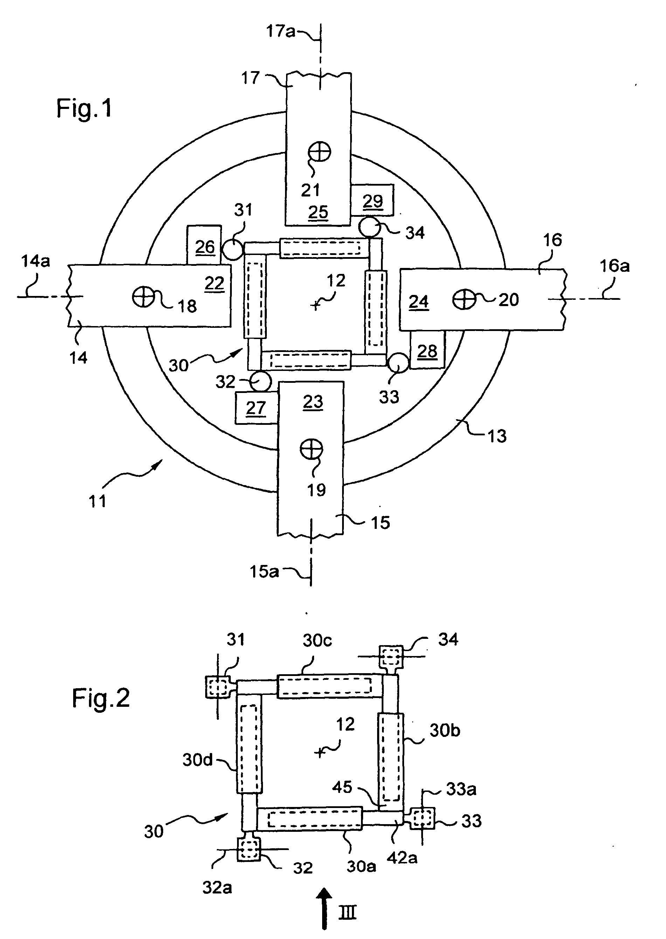

Par référence aux figures 1 à 5, le dispositif s'applique en particulier à un rotor 11 de giravion dont le moyeu comporte une couronne circulaire 13 d'axe 12 ; l'axe 12 est un axe de symétrie générale du moyeu.

Le rotor comporte quatre pales 14 à 17 s'étendant respectivement selon des axes 14a à 17a, à partir du moyeu ; chaque pale est reliée au moyeu par une butée sphérique lamifiée 18 à 21.

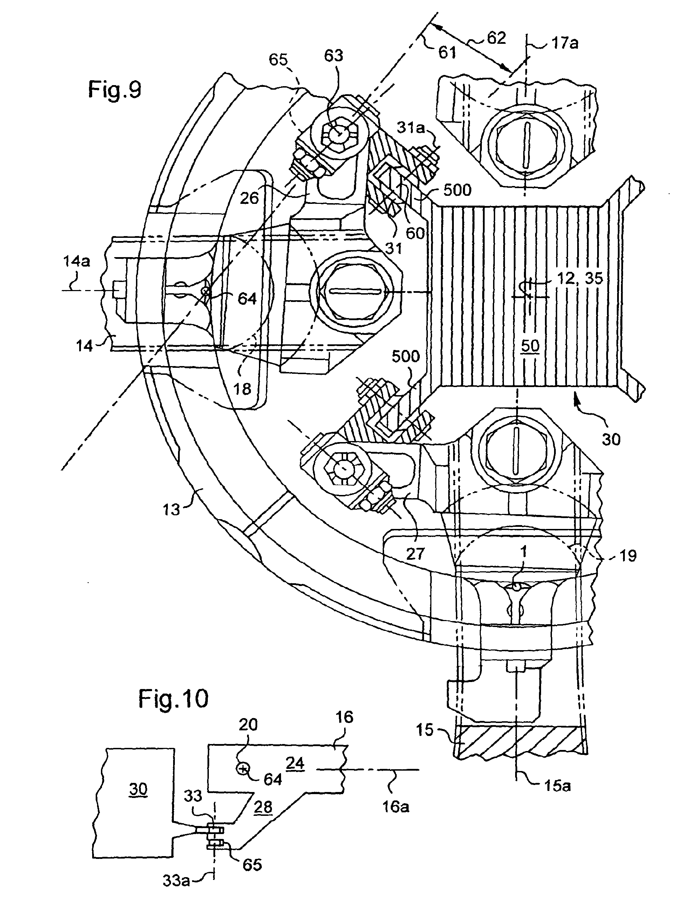

L'exttémité interne ou pied 22 à 25 de chaque pale présente une partie saillante latéralement (levier de pas) à laquelle est fixée une bielle de commande de pas par l'intermédiaire d'une rotule 65 (voir figures 9 et 10 en particulier).

L'amortisseur de traînée 30 est fixé à une saillie latérale 26 à 29 respective du pied 22 à 25 de chacune des pales, par l'intermédiaire d'une articulation 31 à 34 à rotule.

Dans les figures 1 à 5, l'amortisseur présente en vue de dessus une structure en forme de cadre carré ; chaque « côté » ou « montant » de-ec cadre forme une unité d'Amortissement ; l'amortisseur 30 est formé par la liaison deux à deux de ces quatre unités d'amortissement identiques 30a à 30d.

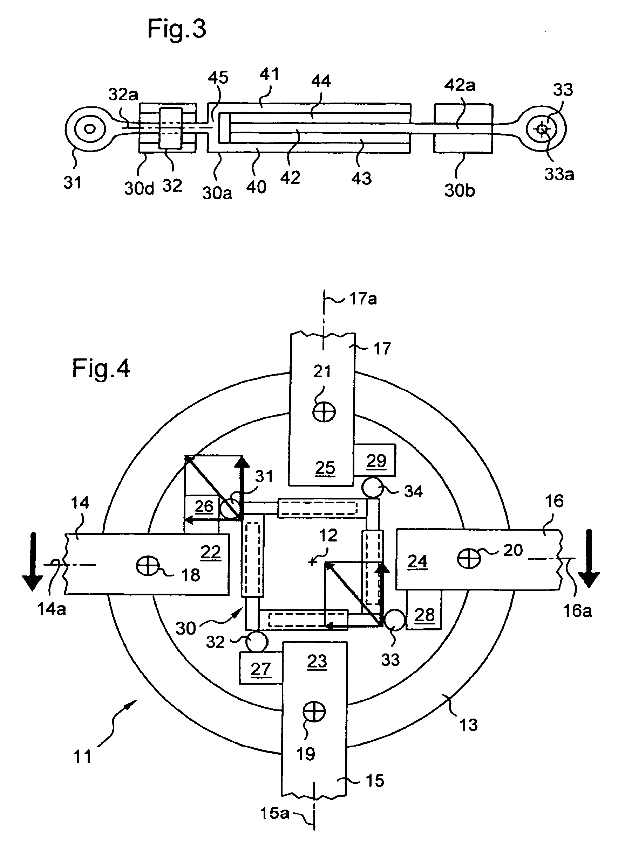

Par référence à la figure 3 en particulier, l'unité d'amortissement 30a comporte deux armatures externes 40, 41 entre lesquelles s'étend une armature interne 42 ; les armatures 40 à 42 sont en forme de plaques planes de forme rectangulaire allongée, et s'étendent parallèlement les unes aux autres ; ces armatures s'étendent perpendiculairement à l'axe 35 (figure 2) de symétrie de l'amortisseur, cet axe étant en position de montage de l'amortisseur, sensiblement confondu avec l'axe 12 (figure 1) du moyeu.

Une première couche 43 d'élastomère relie la face supérieure de l'armature 40 à la face inférieure de l'armature 42, tandis qu'une seconde couche 44 d'élastomère relie la face supérieure de l'armature 42 à la face inférieure de l'armature 41.

L'extrémité externe (saillante) 42a de l'armature interne 42 de l'unité 30a est rigidement solidaire de l'extrémité 45 de l'unité 30b adjacente.

Les armatures 40 et 41 de chaque unité d'amortissement sont rigidement liées entre elles à leur seconde extrémité commune 45.

L'extrémité 42a de l'armature 42 est également rigidement solidaire d'une rotule 33 de liaison avec le pied de la pale correspondante (repère 16 figure 1) ; cette liaison peut être réalisée par emmanchement de la rotule 33 sur un arbre s'étendant selon un axe 33a (figures 2 et 10), cet arbre étant solidaire d'un levier de pas 28 faisant saillie à partir du pied 24 de la pale 16 ; la liaison entre l'amortisseur 30 et les pales 14, 15, 17 est respectivement obtenue par une rotule 31, 32, 34 rigidement solidaire de l'extrémité de l'armature interne (telle que 42) des unités 30c, 30d, 30b d'amortissement de la structure 30.

Les centres d'articulation respective des rotules de liaison de l'amortisseur aux pales sont sensiblement coplanaires.

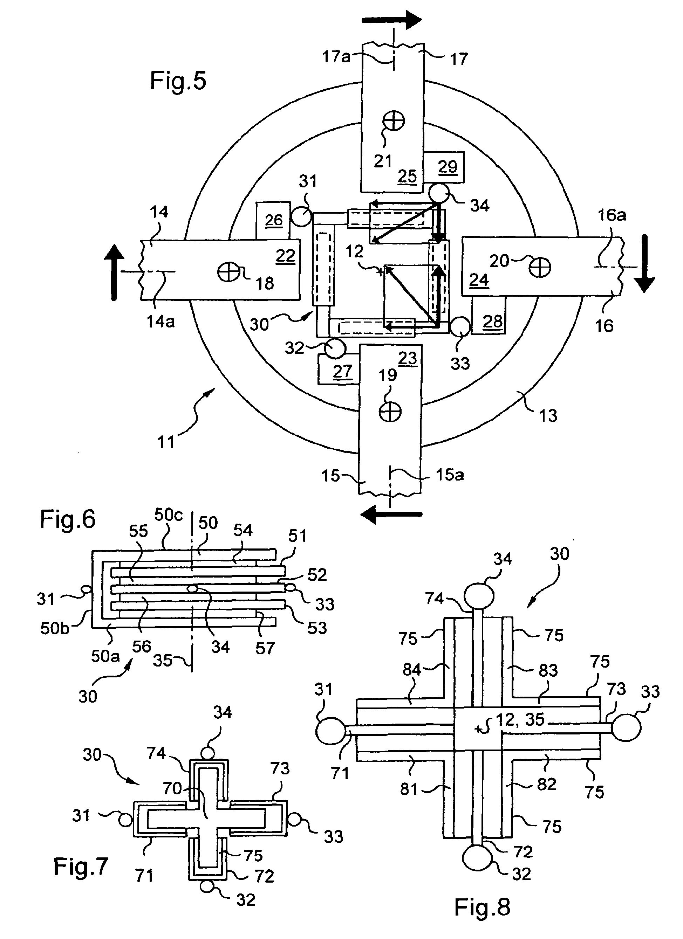

L'adaptateur central unique et ses liaisons aux pales présentent les caractéristiques suivantes :
- chaque pale est reliée à une armature de l'adaptateur au moyen d'une seule rotule,
- chacune de ces armatures est reliée à deux armatures adjacentes par l'intermédiaire d'un matériau (visco-élastique de préférence) ou d'un dispositif apportant la raideur et l'amortissement souhaités ; cette liaison peut être directe, comme illustré figures 1 à 3 en particulier, ou indirecte, comme illustré figures 6 à 8 où au moins une armature liée à une pale est reliée aux armatures adjacentes par l'intermédiaire d'une armature commune unique ;
- le point d'attache des armatures est choisi de façon à minimiser les débattements associés au pas et au battement de la pale ; de préférence, les rotules sont positionnées sur les leviers de pas pour qu'elles ne subissent pratiquement que le mouvement de traînée (cyclique et collectif) des pales ;
- le positionnement de l'adaptateur et des rotules de liaison aux pales est tel que l'adaptateur soit sollicité non seulement par les mouvements cycliques de traînée des pales mais aussi par le mode de traînée collectif. Pour cela, une partie au moins des efforts introduits dans deux armatures adjacentes sont de préférence sur une même ligne d'action et de sens opposé.

La géométrie des armatures des dispositifs d'amortissement illustrés figures 1 à 6 est conçue pour que le cisaillement de l'élastomère se fasse dans un plan horizontal (perpendiculaire à l'axe 12) ; pour les amortisseurs illustrés figures 7 et 8 notamment, le cisaillement de l'élastomère peut se faire dans un plan vertical ou horizontal, ou bien cylindriquement (comme dans les adaptateurs interpale cylindriques).

Le fonctionnement de l'amortisseur des figures 1 à 5 en traînée cyclique est schématisé figure 4, tandis que son fonctionnement en traînée collective est schématisé figure 5.

Par référence à la figure 4, deux pales opposées (14 et 16 sur les dessins) sont animées d'un mouvement dans la même direction (illustré par les deux flèches interrompues), tandis que les deux autres pales (15 et 17) sont sensiblement immobiles.

L'élastomère est alors cisaillé entre les armatures immobiles et les armatures en mouvement : le mouvement de la pale 16 tend à raccourcir les unités 30a et 30b, tandis que celui de la pale 14 tend à allonger les unités 30c et 30d.

La figure 5 montre comment l'adaptateur est sollicité par une partie des efforts introduits par le mouvement de traînée collectif des pales (c'est à dire quand toutes les pales se déplacent dans le même sens).

Le déplacement en traînée de la pale 17, par exemple, produit une rotation de la saillie 29 autour de la butée sphérique 21 et introduit par la rotule 34 une sollicitation de l'adaptateur. Cette sollicitation peut se décomposer en deux efforts de compression (longitudinale) respective des unités 30c et 30b.

En appliquant la même constatation à la pale 16, on constate que l'unité 30b est sollicitée par deux efforts longitudinaux de sens opposé. Le même raisonnement s'applique aux autres pales 14 et 15 ainsi qu'aux autres unités d'amortissement 30a, 30c et 30d. Une telle structure d'amortissement permet donc de traiter aussi le mode collectif de traînée.

Dans les figures 6 et 9, l'amortisseur 30 comporte quatre armatures planes 50 à 53 superposées selon l'axe 35, de forme générale carrée, et reliées deux à deux par une couche respective d'élastomère 54 à 56 ; une saillie latérale (telle que 500 figure 9) sur chaque armature reçoit une rotule (telle que 31) de liaison à la pale correspondante.

L'armature externe 50 comporte deux plaques rigides 50a et 50c qui sont rigidement solidaires l'une de l'autre par l'intermédiaire d'une liaison rigide 50b solidaire de la saillie 500 portant la rotule 31 ; les plaques 50a et 50c sont reliées aux armatures 51, 53 adjacentes par deux couches d'élastomère respectives 54 et 57.

Cette variante est de préférence percée d'un évidement central selon l'axe 12,35.

Par référence à la figure 9, le centre 60 d'articulation de la rotule 31 de liaison entre la pale 14 et l'amortisseur 30, est situé à une distance 62 de l'axe 61 passant par le centre 63 d'articulation d'une rotule 65 de la liaison d'une bielle de commande de pas au levier 26 de pas, et passant par le centre 64 d'articulation de la pale 14 au moyeu 13 (par la butée sphérique).

De préférence, cette distance 62 est inférieure à la distance séparant lesdits centres 63 et 64 d'articulation, l'idéal étant d'annuler cette distance 62 pour filtrer en totalité les mouvements de battement qui perturbent le fonctionnement de l'adaptateur.

L'axe 61 est l'axe de pivotement de la pale lorsqu'elle est soumise à une sollicitation en battement, les centres de rotation 63 et 64 étant fixes en l'absence de commande de variation de pas.

Dans la mode de réalisation illustrée figure 7, l'amortisseur 30 présente une unique armature centrale interne 70 cruciforme à quatre bras, ainsi que quatre armatures externes 71 à 74 respectivement équipées d'une rotule 31 à 34 de liaison à l'une des pales de rotor ; une couche d'élastomère (telle 75) relie respectivement les armatures 71 à 74 à l'un des bras de l'armature commune 70 qui est de préférence « flottante » (désolidarisée) par rapport au moyeu.

Cette variante de réalisation peut être percée d'un évidement central selon l'axe 12,35.

Selon la variante illustrée figure 8, les armatures flottantes 81 à 84 sont externes aux armatures 71 à 74 internes et aux couches d'élastomère 75 ; seule une portion de chaque armature interne portant respectivement les rotules 31 à 34 de liaison, fait saillie hors des armatures 81 à 84.

Les armatures 81 à 84 sont rigidement liées entre elles pour ne constituer qu'une armature unique.

Cette variante de réalisation peut être percée d'un évidement central selon l'axe 12,35.

Dans le mode de réalisation illustré figure 10, la rotule 33 de liaison de l'amortisseur 30 à la pale 16, et la rotule 65 de liaison d'une bielle de commande de pas à cette pale, sont montées adjacentes à l'extrémité du levier de pas 28 de la pale 16, selon un axe commun 33a, et sont sensiblement accolées l'une à l'autre.

De préférence, l'axe 33a est confondu avec l'axe 61 illustré figure 9.

## Revendications

1. Rotor (11) de giravion comportant un moyeu (13), au moins deux pales (14 à 17) articulées par rapport au moyeu selon un axe de pas (14a à 17a), selon un axe de battement, et selon un axe de traînée, ces trois axes coïncidant en un centre d'articulation (64) de la pale, chaque pale étant solidaire d'un levier de pas (26 à 29), le rotor comportant, pour chaque pale, une bielle de commande de pas reliée au levier de pas par une première rotule (65), ainsi qu'une structure commune (30) d'amortissement en traînée sensiblement centrée sur l'axe de rotation (12) du rotor et reliée à chacune des pales, la structure commune d'amortissement étant désolidarisée du moyeu et comportant plusieurs unités d'amortissement identiques,
**caractérisé en ce que** la structure d'amortissement en traînée comporte une armature (70, 81-84) commune à plusieurs unités d'amortissement et désolidarisée du moyeu, et **en ce que** la structure d'amortissement en traînée est fixée à une saillie latérale respective de chaque pale, formant le levier de pas (26 à 29) de chaque pale, par une seule seconde rotule (31 à 34) suffisamment proche de la première rotule (65) reliant la bielle de pas au levier de pas pour que le système d'amortissement en traînée soit peu sensible - sinon insensible - aux oscillations de battement des pales articulées.

2. Rotor selon la revendication 1 dans lequel la structure d'amortissement (30) est fixée à l'extrémité libre du levier de pas (26 à 29) équipant chaque pale, par ladite seconde rotule (31 à 34).

3. Rotor selon l'une quelconque des revendications 1 à 2 dans lequel la seconde rotule de liaison (31 à 34) articulée entre le levier de pas (26 à 29) et la structure commune (30) et centrale d'amortissement en traînée, est accolée à la première rotule de liaison (65) articulée entre le levier de pas et la bielle de commande de pas.

4. Rotor selon l'une quelconque des revendications 1 à 3 dans lequel la seconde rotule de liaison (31 à 34) articulée entre le levier de pas (26 à 29) et la structure commune (30) et centrale d'amortissement en traînée, est coaxiale à la première rotule de liaison (65) articulée entre le levier de pas et la bielle de commande de pas.

5. Rotor selon l'une quelconque des revendications 1 à 4 dans lequel la seconde rotule de liaison (31 à 34) articulée entre le levier de pas (26 à 29) et la structure commune (30) et centrale d'amortissement en traînée est disposée entre une butée sphérique (18 à 21) reliant la pale au moyeu, et la première rotule (65) de liaison articulée entre le levier de pas et la bielle de commande de pas.

6. Rotor selon l'une quelconque des revendications 1 à 5 dans lequel le centre (60) de la seconde rotule (31 à 34) est situé au voisinage de l'axe (61) reliant le centre (64) d'une butée sphérique d'articulation de la pale au centre (63) de la première rotule de liaison.

7. Rotor selon l'une quelconque des revendications 1 à 6 dans lequel les centres (60) d'articulation respective des secondes rotules (31 à 34) de liaison de l'amortisseur aux pales sont coplanaires.

8. Rotor selon l'une quelconque des revendications 1 à 7 dans lequel chaque pale (14 à 17) est reliée à une armature (70; 81 à 84) de la structure d'amortissement (30) au moyen d'une seule rotule (31 à 34) rigidement solidaire de ladite armature.

9. Rotor selon l'une quelconque des revendications 1 à 8 dans lequel la structure d'amortissement (30) comporte des armatures dont chacune est reliée, directement ou indirectement, à deux armatures adjacentes par l'intermédiaire d'une couche d'un matériau visco-élastique sollicitée en cisaillement.

10. Rotor selon l'une quelconque des revendications 1 à 9 dans lequel le positionnement de la structure d'amortissement (30) et des rotules de liaison aux pales est tel que la structure d'amortissement est sollicitée par le mode de traînée collectif.

11. Rotor selon l'une quelconque des revendications 1 à 10 dans lequel la structure d'amortissement (30) présente une unique armature centrale interne (70) comportant plusieurs bras, ainsi que des armatures externes (71 à 74) respectivement équipées d'une rotule (31 à 34) de liaison à l'une des pales de rotor, une couche d'élastomère (75) reliant respectivement les armatures (71 à 74) à l'un des bras de l'armature commune (70) qui est désolidarisée du moyeu.

12. Rotor selon l'une quelconque des revendications 1 à 10 dans lequel la structure d'amortissement (30) présente une armature commune flottante (81 à 84) externe aux armatures internes (71 à 74) et aux couches d'élastomère (75), seule une portion de chaque armature interne portant respectivement les rotules (31 à 34) de liaison, faisant saillie hors de l'armature commune flottante.

## Claims

1. Rotorcraft rotor (11) comprising a hub (13) and at least two blades (14 to 17) hinged relative to the hub about a pitch axis (14a to 17a), about a flap axis, and about a drag axis, these three axes coinciding at a hinge centre (64) for each blade, each blade being secured to a pitch lever (26 to 29), the rotor including for each blade a pitch control rod connected to the pitch lever via a first ball joint (65), and a common drag damper structure (30) centred substantially on the axis of rotation (12) of the rotor and connected to each of the blades, the common damper structure not being secured to the hub and comprising a plurality of identical damper units,
**characterised in that** the drag damper structure comprises a strip (70, 81-84) common to a plurality of damper units and not secured to the hub, and **in that** the drag damper structure is secured to a respective lateral projection of each blade, forming the pitch lever (26 to 29) of each blade, via a single second ball joint (31 to 34) that is sufficiently close to the first ball joint (65) connecting the pitch rod to the pitch lever to ensure that the drag damper system is relatively or completely insensitive to flap oscillations of the hinged blades.

2. Rotor according to Claim 1, in which the damper structure (30) is secured via said second ball joint (31 to 34) to the free end of the pitch lever (26 to 29) fitted to each blade.

3. Rotor according to either one of Claims 1 and 2, in which the second connection ball joint (31 to 34) hinged between the pitch lever (26 to 29) and the common, central drag damper structure (30) is beside the first connection ball joint (65) hinged between the pitch lever and the pitch control rod.

4. Rotor according to any one of Claims 1 to 3, in which the second connection ball joint (31 to 34) hinged between the pitch lever (26 to 29) and the common, central drag damper structure (30) lies on the same axis as the first connection ball joint (65) hinged between the pitch lever and the pitch control rod.

5. Rotor according to any one of Claims 1 to 4, in which the second connection ball joint (31 to 34) hinged between the pitch lever (26 to 29) and the common, central drag damper structure (30) is disposed between a spherical thrust-bearing (18 to 21) connecting the blade to the hub, and the first connection ball joint (65) hinged between the pitch lever and the pitch control rod.

6. Rotor according to any one of Claims 1 to 5, in which the centre (60) of the second ball joint (31 to 34) is situated close to the axis (61) joining the centre (64) of a spherical thrust-bearing hinging the blade to the centre (63) of the first connection ball joint.

7. Rotor according to any one of Claims 1 to 6, in which the respective hinge centres (60) of the second ball joints (31 to 34) connecting the damper to the blades are coplanar.

8. Rotor according to any one of Claims 1 to 7, in which each blade (14 to 17) is connected to a strip (70; 81 to 84) of the damper structure (30) by means of a single ball joint (31 to 34) rigidly secured to said strip.

9. Rotor according to any one of Claims 1 to 8, in which the damper structure (30) comprises strips each of which is connected directly or indirectly to two adjacent strips via a layer of visco-elastic material that is stressed in shear.

10. Rotor according to any one of Claims 1 to 9, in which the positioning of the damper structure (30) and of the ball joints connecting it to the blades is such that the damper structure is stressed by the collective drag mode.

11. Rotor according to any one of Claims 1 to 10, in which the damper structure (30) has a single central inner strip (70) comprising a plurality of arms, together with outer strips (71 to 74) respectively fitted with a ball joint (31 to 34) connecting to one of the rotor blades, an elastomer layer (75) respectively connecting the strips (71 to 74) to one of the arms of the common strip (70) which is not secured to the hub.

12. Rotor according to any one of Claims 1 to 10, in which the damper structure (30) has a floating common strip (81 to 84) external to the inner strips (71 to 74) and to the elastomer layers (75), with only a portion of each inner strip respectively carrying the connection ball joints (31 to 34) projecting outside the floating common strip.

## Patentansprüche

1. Rotor (11) eines Drehflügelflugzeugs mit einer Nabe (13), mindestens zwei Rotorblättern (14 bis 17), die relativ zur Nabe um eine Achse der Blattverstellung (14a bis 17a), um eine Achse der Schlagbewegungen und um eine Schwenkachse drehbar angelenkt sind, wobei diese drei Achsen in einem Mittelpunkt der Rotorblattanlenkung (64) zusammenfallen, wobei jedes Rotorblatt mit einem Blattverstellhebel (26 bis 29) fest verbunden ist, der Rotor für jedes Rotorblatt aufweist: eine Rotorblattverstellstange, die mit dem Blattverstellhebel über ein erstes Kugelgelenk (65) verbunden ist sowie eine einzige gemeinsame Schwenkdämpfungsstruktur (30), die im Wesentlichen auf die Rotationsachse (12) des Rotors zentriert ist und mit jedem der Rotorblätter verbunden ist, wobei die gemeinsame Schwenkdämpfungsstruktur von der Nabe gelöst ist und mehrere identische Dämpfungseinheiten aufweist,
**dadurch gekennzeichnet, dass** die Schwenkdämpfungsstruktur eine gemeinsame Ausrüstung (70, 81-84) mit mehreren von der Nabe losgelösten Dämpfungseinheiten aufweist und **dadurch**, dass die Schwenkdämpfungsstruktur jeweils an einem seitlichen Vorsprung eines jeden Rotorblatts befestigt ist, der den Blattverstellhebel (26 bis 29) eines jeden Rotorblatts bildet, wobei die Befestigung über ein einziges zweites Kugelgelenk (31 bis 34) erfolgt, welches hinreichend nahe dem ersten Kugelgelenk (65) angeordnet ist, welches die Verstellstange mit dem Blattverstellhebel verbindet, damit das Schwenkdämpfungssystem nur wenig empfindlich - wenn nicht gar nicht empfindlich - auf Schlagschwingungen der angelenkten Rotorblätter reagiert.

2. Rotor nach Anspruch 1, bei dem die Dämpfungsstruktur (30) am freien Ende des Blattverstellhebels (26 bis 29), mit dem jedes Rotorblatt ausgerüstet ist, über das zweite Kugelgelenk (31 bis 34) befestigt ist.

3. Rotor nach einem der Ansprüche 1 oder 2, bei dem das zweite Kugelgelenk (31 bis 34) zur Herstellung einer gelenkigen Verbindung zwischen dem Blattverstellhebel (26 bis 29) und der gemeinsamen Struktur (30) sowie der Schwenkdämpfungszentrale neben dem ersten Kugelgelenk zur gelenkigen Verbindung (65) zwischen dem Blattverstellhebel und der Blattverstellstange angeordnet ist.

4. Rotor nach einem der Ansprüche 1 bis 3, bei dem das zweite Kugelgelenk zur gelenkigen Verbindung (31 bis 34) des Blattverstellhebels (26 bis 29) mit der gemeinsamen Struktur (30) und der Schwenkdämpfungszentrale koaxial zu dem ersten Kugelgelenk zur gelenkigen Verbindung (65) zwischen dem Blattverstellhebel und der Blattverstellstange angeordnet ist.

5. Rotor nach einem der Ansprüche 1 bis 4, bei dem das zweite Kugelgelenk zur gelenkigen Verbindung zwischen dem Blattverstellhebel (26 bis 29) und der gemeinsamen und zentralen Schwenkdämpfungsstruktur (30) zwischen einem kugelförmigen Anschlag (18 bis 21), der das Rotorblatt mit der Nabe verbindet, und dem ersten Kugelgelenk (65) zur gelenkigen Verbindung zwischen dem Blattverstellhebel und der Blattverstellstange angeordnet ist.

6. Rotor nach einem der Ansprüche 1 bis 5, bei dem der Mittelpunkt (60) des zweiten Kugelgelenks (31 bis 34) in der Nähe der Achse (61) gelegen ist, die den Mittelpunkt (64) eines kugelförmigen Gelenkanschlags des Rotorblatts mit dem Mittelpunkt (63) des ersten Verbindungskugelgelenks verbindet.

7. Rotor nach einem der Ansprüche 1 bis 6, bei dem die jeweiligen Gelenkmittelpunkte (60) der zweiten Kugelgelenke (31 bis 34) zur Verbindung der Dämpfungsstruktur mit den Rotorblättern coplanar sind.

8. Rotor nach einem der Ansprüche 1 bis 7, bei dem jedes Rotorblatt (14 bis 17) mit einer Ausrüstung (70; 81 bis 84) der Dämpfungsstrukhar (30) mittels eines einzigen Kugelgelenks (31 bis 34) verbunden ist, welches mit der Ausrüstung fest verbunden ist.

9. Rotor nach einem der Ansprüche 1 bis 8, bei dem die Dämpfungsstruktur (30) Ausrüstungen aufweist, von denen jede direkt oder indirekt mit zwei benachbarten Ausrüstungen über eine Schicht aus viskosem elastischen Material verbunden ist, welches Scherbelastungen ausgesetzt ist.

10. Rotor nach einem der Ansprüche 1 bis 9, bei dem die Positionierung der Dämpfungsstruktur (30) und der Verbindungskugelgelenke der Rotorblätter derart gewählt ist, dass die Dämpfungsstruktur mit der kollektiven Schwenkbeanspruchung beaufschlagt ist.

11. Rotor nach einem der Ansprüche 1 bis 10, bei dem die Dämpfungsstruktur (30) eine einzige zentrale innere Ausrüstung (70) aufweist, mit mehreren Armen, wobei die äußeren Ausrüstungen (71 bis 74) jeweils mit einem Kugelgelenk (31 bis 34) zur Verbindung mit einem der Rotorblätter versehen sind, wobei eine Schicht aus einem Elastomer (75) jeweils die Ausrüstungen (71 bis 74) mit einem der Arme der gemeinsamen Ausrüstung (70), die von der Nabe losgelöst ist, verbinden.

12. Rotor nach einem der Ansprüche 1 bis 10, bei dem die Dämpfungsstruktur (30) eine gemeinsame schwebend gelagerte bezüglich der inneren Ausrüstungen (71 bis 74) und bezüglich der Elastomerschichten (75) äußere Ausrüstung (81 bis 84) aufweist, wobei lediglich ein Teil einer jeden inneren Ausrüstung jeweils die Verbindungskugelgelenke (31 bis 34) trägt, die gegenüber der gemeinsamen schwebend gelagerten Ausrüstung überstehen.
